# EUROPÄISCHE PATENTANMELDUNG

(11) **EP 2 623 250 A1**
(43) Veröffentlichungstag der Anmeldung: **07.08.2013**
(21) Anmeldenummer: 12153721.1
(22) Anmeldetag: 02.02.2012
(51) Int. Cl.: B23K 26/14

(54) **Maschine und Verfahren zur Materialbearbeitung mit einem Laserstrahl**

(71) Anmelder: IPG Laser GmbH, 57299 Burbach (DE)
(72) Erfinder: Schramm, Ingo, 57587 Birken-Honigsessen (DE); Fuchs, Artjom, 57258 Freudenberg (DE); Stobbe, Sergei, 57539 Bruchertseifen (DE); Siewert, Andreas, 44581 Castrop-Rauxel (DE); Barz, Manfred, 56170 Bendorf (DE); Thieme, Jörg, 90518 Altdorf (DE)
(74) Vertreter: Kohlmann, Kai

(57) **Zusammenfassung**

Die Erfindung betrifft eine Maschine zur Materialbearbeitung mit einem Laserstrahl umfassend ein Schutzgehäuse mit einer in Richtung einer Strahlungsachse ausgerichteten Fokussieroptik, einer Austrittsöffnung, die den sich bei der Materialbearbeitung entlang der Strahlungsachse ausbreitenden Laserstrahl umgibt, eine im Inneren des Schutzgehäuses mündende Düse zur Erzeugung eines quer zur Strahlungsachse verlaufenden Gasstrahls und einen diametral gegenüber der Düse an dem Schutzgehäuse angeordneten Auslass für einen Abgasstrom. Um die Geräuschentwicklung und den Austritt von Verunreinigungen mit dem Abgasstrom zu reduzieren und die Standzeit des Schutzglases vor der Fokussieroptik zu verlängern, wird erfindungsgemäß vorgeschlagen, dass das Schutzgehäuse mindestens einen im Inneren des Schutzgehäuses mündenden Gaseinlass aufweist, der mit einer Druckquelle zur Lieferung eines Gases mit einem Überdruck gegenüber dem Umgebungsdruck verbunden ist und die Maschine einen Abscheider zur Absonderung von Verunreinigungen mit einem Eintritt für den Abgasstrom und einem Austritt für den gereinigten Abgasstrom aufweist, wobei der Eintritt mit dem Auslass und der Austritt mit einem Unterdruckerzeuger verbunden ist. Außerdem wird ein Verfahren zur Materialbearbeitung mit einer derartigen Maschine vorgeschlagen.

## Beschreibung

Die Erfindung betrifft eine Maschine zur Materialbearbeitung von Werkstücken mit einem Laserstrahl umfassend ein insbesondere maschinengeführtes Schutzgehäuse mit einer in Richtung einer Strahlungsachse ausgerichteten Fokussieroptik, einer Austrittsöffnung, die den sich bei der Materialbearbeitung entlang der Strahlungsachse ausbreitenden Laserstrahl umgibt, eine im Inneren des Schutzgehäuses mündende Düse zur Erzeugung eines quer zur Strahlungsachse verlaufenden Gasstroms und einen diametral gegenüber der Düse an dem Schutzgehäuse angeordneten Auslass für den Gasstrom Außerdem betrifft die Erfindung ein Verfahren zur Materialbearbeitung eines Werkstücks mit einem Laserstrahl.

Moderne Hochleistungslaser werden in der industriellen Fertigung zur Materialbearbeitung eingesetzt. Insbesondere gewinnt das Laserstrahlschweißen zunehmend an Bedeutung. Laserstrahlschweißen wird vor allem zum Verschweißen von Werkstücken eingesetzt, die mit hoher Schweißgeschwindigkeit, mit schmaler Schweißnaht und mit geringem thermischem Verzug gefügt werden müssen. Das Laserstrahlschweißen wird in der Regel ohne Zuführung eines Zusatzwerkstoffes ausgeführt. Um die Laserstrahlung flexibel zu dem Werkstück zu führen, weist eine Anordnung zum Laserstrahlschweißen üblicherweise eine Strahlquelle und ein Strahlführungssystem auf. Das Strahlführungssystem umfasst insbesondere einen flexiblen Lichtwellenleiter (LWL), mit dem die Laserstrahlung von der Strahlquelle zu einem Schutzgehäuse mit einer Austrittsöffnung für den Laserstrahl geführt wird. Das Schutzgehäuse ist insbesondere an einem mehrachsig beweglichen Arm eines Industrieroboters angeordnet. Die Strahlquelle, beispielsweise ein Festkörperlaser, ist indes vorzugsweise stationär angeordnet.

Von derartigen Lasereinrichtungen gehen nicht unerhebliche Gesundheitsgefahren aus. Die konzentrierte elektromagnetische Strahlung kann biologische Schäden bei den Anwendern der Lasereinrichtung hervorrufen. Im Sinne der für derartige Einrichtungen gültigen Unfallverhütungsvorschriften werden Lasereinrichtungen in unterschiedliche Klassen eingeordnet. Für Maschinen zum Laserstrahlschweißen, die für die Automobilproduktion bestimmt sind, wird das geringste Gefährdungspotential verlangt, wonach die zugängliche Laserstrahlung der Lasereinrichtung ungefährlich sein muss (Klasse 1). Unter dem Begriff Schutzgehäuse werden im Sinne dieser Unfallverhütungsvorschriften diejenigen Teile der Lasereinrichtung verstanden, die dafür vorgesehen sind, zugängliche Strahlung zu verhindern, die die vorgeschriebenen Grenzwerte der zugänglichen Strahlung übersteigt.

Die EP 2 149 421 A1 offenbart eine gattungsgemäße Maschine zum Laserstrahlschweißen, bei der eine Strahlquelle über einen Lichtwellenleiter mit einer Fokussieroptik verbunden ist, wobei die Fokussieroptik in einem maschinengeführten Schutzgehäuse mit einer Austrittsöffnung für den Laserstrahl angeordnet ist. Der bei der Verschweißung auf mindestens ein Werkstück gerichtete Laserstrahl wird von der Fokussieroptik so ausgerichtet, dass der Laserstrahl ausschließlich entlang einer Strahlungsachse durch die schlitzförmige Austrittsöffnung hindurch aus dem Schutzgehäuse austritt.

Um die empfindliche Fokussieroptik vor Ablagerungen aus dem Schweißrauch sowie beim Schweißen freigesetzten Partikeln und Spritzern zu schützen, ist zwischen der Austrittsöffnung und der Fokussieroptik ein Schutzglas angeordnet. Das durch Ablagerung und Partikel verunreinigte Schutzglas muss in regelmäßigen Abständen gereinigt bzw. gewechselt werden. Um die Reinigungs- bzw. Wechselintervalle auszudehnen mündet im Inneren des Schutzgehäuses eine Düse, auch als Cross-Jet-Düse bezeichnet, zur Erzeugung eines quer zur Strahlungsachse des Laserstrahls verlaufenden Gasstrahls. Diametral gegenüber der Cross-Jet-Düse ist an dem Schutzgehäuse ein Auslass für einen Abgasstrom angeordnet. Der Auslass steht mit einem spiralförmig gewundenen Auslasskanal in Verbindung, um einen Austritt von Laserstrahlung aus dem Schutzgehäuse zu unterbinden. Der Gasstrom der Cross-Jet-Düse nimmt einen Teil der Verunreinigungen auf, die durch den Auslasskanal in einem Abgasstrom an die Umgebungsluft abgegeben werden. Bei der Abgabe an die Umgebungsluft kommt es zu nicht unerheblichen Lärmbelästigungen, die bei Laserschweißgeräten der Klasse 1 nicht akzeptabel sind.

Ausgehend von diesem Stand der Technik liegt der Erfindung die Aufgabe zugrunde, eine Maschine zur Materialbearbeitung der eingangs erwähnten Art vorzuschlagen bei der die Geräuschentwicklung und der Austritt von Verunreinigungen mit dem Abgasstrom reduziert und die Standzeit des Schutzglases vor der Fokussieroptik verlängert wird. Ferner soll ein Verfahren zur Lösung dieser Aufgabe angegeben werden.

Diese Aufgabe wird bei einer Maschine der eingangs erwähnten Art dadurch gelöst, dass
- das Schutzgehäuse mindestens einen im Inneren des Schutzgehäuses mündenden Gaseinlass aufweist, der mit einer Druckquelle zur Lieferung eines Gases mit einem Überdruck gegenüber dem Umgebungsdruck verbunden ist
- und die Maschine einem Abscheider zur Absonderung von Verunreinigungen mit einem Eintritt für den Abgasstrom und einem Austritt für den gereinigten Abgasstrom aufweist, wobei der Eintritt mit dem Auslass und der Austritt mit einem Unterdruckerzeuger verbunden ist.

Über den mindestens einen Gaseinlass wird das Gas von der Druckquelle zugeführt. Die Zufuhr des unter Überdruck stehenden Gases bewirkt, dass sich kein bzw. ein geringerer Unterdruck um den Gasstrahl der Cross-Jet-Düse im Inneren des Schutzgehäuses ausbildet. Hierdurch wird der Luftstrahl der Cross-Jet-Düse beschleunigt. Die Verhinderung der Ausbildung bzw. Reduzierung des Unterdrucks ist darüber hinaus von Bedeutung, weil durch den Unterdruck Verunreinigungen in Richtung der Fokussieroptik angesaugt werden, die sich auf dem Schutzglas niederschlagen können. Infolge der Verhinderung der Ausbildung bzw. Reduzierung eines Unterdrucks um den Gasstrahl der Cross-Jet-Düse wird die Verschmutzung des Schutzglases deutlich verlangsamt. In Versuchen konnten Standzeiten des Schutzglases von einer Woche entsprechend etwa 40.000 bis 50.000 Schweißpunkten erreicht werden.

Eine Verschmutzung der Umgebungsluft verhindert der Abscheider zur Absonderung von Verunreinigungen dessen Eintritt mit dem Auslass des Schutzgehäuses und dessen Austritt mit dem Unterdruckerzeuger verbunden ist. Die Ableitung des Abgasstroms über den Abscheider und Unterdruckerzeuger verhindert zugleich einen Austritt von Laserstrahlung und reduziert die Schallemissionen der Maschine. Schließlich beschleunigt der Unterdruckerzeuger den Gasstrahl innerhalb des Schutzgehäuses, wodurch Verunreinigungen, die in den Wirkungsbereich des Luftstrahls gelangen, noch rascher abtransportiert werden.

Der Gaseinlass kann die Cross-Jet-Düse konzentrisch umgeben, so dass das unter Überdruck stehende Gas ein Hüllströmung um den Gasstrahl der Cross-Jet-Düse ausbildet. In einer vorteilhaften Ausgestaltung der Erfindung sind zwei Gaseinlässe vorgesehen, wobei ein Gaseinlass in Richtung der Strahlungsachse oberhalb und ein Gaseinlass in Richtung der Strahlungsachse unterhalb der Düse im Inneren des Schutzgehäuses münden. Die beiden Gaseinlässe sind unmittelbar benachbart zu der Mündung der Cross-Jet-Düse angeordnet. Hierdurch wird verhindert, dass sich in Bezug zu der Strahlungsachse an der Ober- und Unterseite des Gasstrahls ein Unterdruck ausbildet der Verunreinigungen ansaugt.

In vorteilhafter Ausgestaltung der Erfindung ist die Cross-Jet-Düse als Schlitzdüse ausgestaltet, deren Längserstreckung vorzugsweise quer zur Strahlungsachse des Laserstrahls verläuft. Eine derart angeordnete Schlitzdüse bildet einen Gasstrahl aus, der sich wie ein Gasvorhang über den Innenquerschnitt des Schutzgehäuses erstreckt.

Als Druckquelle zur Lieferung eines Gases, insbesondere Luft, mit einem Überdruck gegenüber dem Umgebungsdruck im Aufstellungsbereich der Maschine kommt insbesondere ein Verdichter in Betracht, der über eine Druckleitung mit dem mindestens einen Einlass in Verbindung steht. Der Verdichter erzeugt einen vorzugsweise einstellbaren Überdruck in einem Bereich zwischen 0 bis 10 bar gegenüber dem Umgebungsdruck, der abhängig von der Stärke des Cross-Jets eingestellt wird.

Zur Reinigung des Abgasstromes kommt insbesondere ein Fliehkraftabscheider, auch als Zyklon bezeichnet, in Betracht. Im Fliehkraftabscheider wird der Abgasstrom in eine Drehbewegung versetzt. Die dabei auf die Verunreinigungen wirkenden Zentrifugalkräfte beschleunigen diese radial nach außen. Sie werden dadurch von dem Gas des Abgasstroms getrennt, das nach innen geleitet und über den Unterdruckerzeuger abgeführt wird. Ein Fliehkraftabscheider besteht von oben nach unten betrachtet im wesentlichen aus einem Einlaufzylinder, einem sich an den Einlaufzylinder anschließenden, in Richtung eines Produktsaustritts verjüngenden Kegel, einem unterhalb des Produktaustritts angeordneten Auffangbehälter für die abgeschiedenen Verunreinigungen sowie einem Tauchrohr das von oben in den Einlaufzylinder hineinragt zum Abführen des gereinigten Abgasstroms.

In dem Einlaufzylinder wird der Abgasstrom auf eine kreisförmige Bahn gebracht. Durch die Verjüngung des sich anschließenden Kegels nimmt die Drehgeschwindigkeit zu, wodurch die Partikel durch die Fliehkraft an die Kegelwände geschleudert und soweit abgebremst werden, dass sie sich aus der Gasströmung lösen und nach unten in den Auffangbehälter rieseln. Der gereinigte Abgasstrom verlässt den Kegel durch das mittige Tauchrohr, wobei das nach außen weisende Ende des Tauchrohrs als Austritt mit dem Unterdruckerzeuger verbunden ist. Der Vorteil des Fliehkraftabscheiders besteht in seiner robusten und wartungsarmen Bauweise, die mit den deutlich verlängerten Wechselintervallen der Schutzgläser korrespondiert.

Eine weitere Maßnahme zur Reduktion von Verunreinigungen des Schutzglases besteht darin, dass in dem Schutzgehäuse oberhalb der Mündung der Cross-Jet-Düse eine Einrichtung zur Erzeugung einer spiralförmigen Gasströmung angeordnet ist. Die spiralförmige Gasströmung verhindert eine Beeinträchtigung der Qualität des Laserstrahls durch Verunreinigungen. Die Einrichtung zur Erzeugung der spiralförmigen Gasströmung ist insbesondere als Zirkulationsdüse ausgestaltet. Die Zirkulationsdüse umfasst einen Luftzufuhr-Kanal am oberen Rand, einen sich daran anschließenden konisch verjüngenden rohrförmigen Abschnitt, durch den der Laserstrahl hindurchgeführt wird sowie in der Innenfläche des rohrförmigen Abschnitts mündende Austrittsöffnungen für den Gasstrahl. Die Austrittsöffnungen sind über Durchgänge in der Wand der Zirkulationsdüse mit dem Luftzuführungskanal am oberen Rand verbunden. Die Rotationsachse des kegelstumpfförmigen rohrförmigen Abschnittes verläuft parallel zur Strahlungsachse bzw. fällt mit dieser zusammen.

Die erfindungsgemäße Maschine zur Materialbearbeitung nach einem oder mehreren der Ansprüche 1-5 ist vorzugsweise Bestandteil einer Anordnung umfassend eine Strahlquelle für Laserstrahlung sowie ein Strahlführungssystem, das die Laserstrahlung von der Strahlquelle zu einer Fokussieroptik der Maschine führt. Die Strahlquelle ist vorzugsweise ein Faserlaser. Faserlaser verfügen über einen hohen elektrisch-optischen Wirkungsgrad, eine herausragende Strahlqualität, eine hohe Lebensdauer und einen kompakten, wartungsfreien und unempfindlichen Aufbau, weshalb sie für den vorgesehenen Anwendungsfall besonders geeignet sind.

Der mindestens eine dotierte Kern einer Glasfaser bildet das aktive Medium. Faserlaser werden im Allgemeinen optisch gepumpt, indem parallel zum Faserkern in dessen Mantel oder in diesen selbst Strahlung eingekoppelt wird. Die Pumpstrahlung stammt vorzugsweise von einer Pumpanordnung, die aus mehreren Laserdioden besteht. Als Dotierungselement für jeden laseraktiven Faserkern kommen Ytterbium und Neodym für die geforderte Hochleistungsanwendung zum Einsatz. Nach der Strahlerzeugung im dotierten Kern verbleibt der Laserstrahl in einer nicht dotierten Glasfaser, welcher die Strahlung bis zum optischen Koppelelement leitet. In diesem faseroptischen Element werden die einzelnen Lasermodule zusammengekoppelt, um die erforderliche Laserleistung zu erreichen.

Nachfolgend wird die Erfindung an Hand der Abbildungen näher erläutert. Es zeigen:
- **Figur 1**: eine schematische Seitenansicht einer Maschine zum Laserschweißen
- **Figur 2a**: eine geschnittene Seitenansicht eines Schutzgehäuses einer Maschine nach Figur 1
- **Figur 2b**: eine vergrößerte Darstellung des Details B nach Figur 2a.

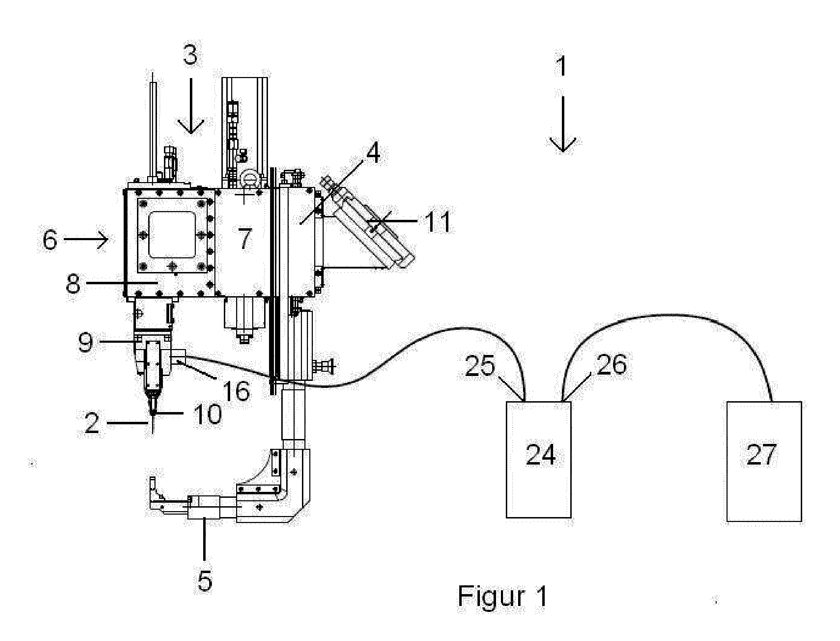

Figur 1 zeigt den prinzipiellen Aufbau einer Maschine (1) zur Materialbearbeitung, nämlich zum Verschweißen von Werkstücken mit einem Laserstrahl (2) eines Hochleistungslasers. Das Schweißwerkzeug (3) ist im Wesentlichen als Laser-Schweißzange ausgeführt mit einem an einem Zangengestell (4) angeordneten, im Wesentlichen C-förmigen Unterwerkzeug (5) und einem Oberwerkzeug (6). An dem Zangengestell (4) ist eine Verfahreinheit (7) angeordnet, mit der das Oberwerkzeug (6) in Richtung des Unterwerkzeugs (5) bzw. von diesem weg bewegbar ist. Das Oberwerkzeug (6) umfasst ein an der Verfahreinheit (7) befestigtes Schutzgehäuse (8). Das Schutzgehäuse weist an der dem Unterwerkzeug (5) zugewandten Seite ein sich gegenüber dem übrigen Schutzgehäuse (8) verjüngendes Druckstück (9) mit einer Austrittsöffnung (10) auf, die den bei der Materialbearbeitung auf das Werkstück gerichteten Laserstrahl (2) umgibt. Das Schweißwerkzeug (3) ist an einer Flanschplatte (11) mit einem Arm eines nicht dargestellten Roboters befestigt.

Die in den Figuren nicht dargestellte Strahlquelle ist ortsfest im Abstand zu dem mittels des Roboterarms beweglichen Schweißwerkzeug (3) angeordnet. Die Strahlquelle ist als Laser, insbesondere als Faserlaser ausgeführt. Die Laserstrahlung wird über ein Strahlführungssystem, insbesondere einen flexiblen Lichtwellenleiter zu einer Fokussieroptik (12) innerhalb des Schutzgehäuses (8) geführt. Durch die Anordnung und Ausrichtung der Fokussieroptik (12) wird gewährleistet, dass die Laserstrahlung sich entlang einer Strahlungsachse (13) ausbreitet und die schlitzförmige Austrittsöffnung (10) den Laserstrahl (2) umgibt.

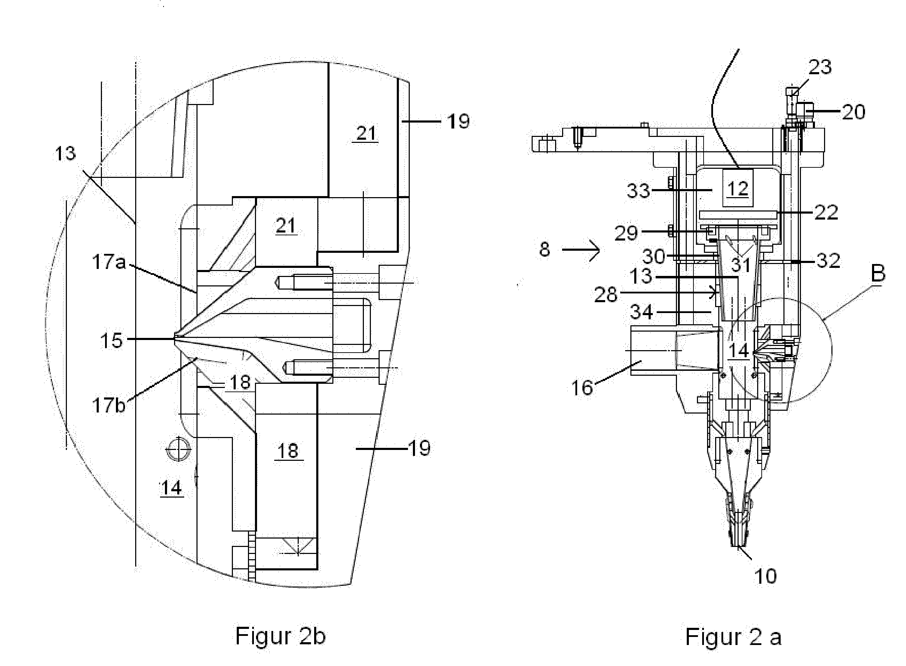

Im Inneren (14) des Schutzgehäuses (8) mündet eine Schlitzdüse (15) mit einer Schlitzbreite von etwa 0,125 mm, die einen quer zur Strahlungsachse (13) verlaufenden Gasstrahl erzeugt. Diametral gegenüber der Schlitzdüse (15) ist ein Auslass (16) für einen Abgasstrom angeordnet. In Richtung der Strahlungsachse (13) oberhalb und in Richtung der Strahlungsachse (13) unterhalb der Schlitzdüse (15) mündet jeweils ein schlitzförmiger Gaseinlass (17a) bzw. (17b). Wie aus der Vergrößerung in der Darstellung nach Figur 2b erkennbar grenzen die Gaseinlässe (17a,b) unmittelbar an den oberen und unteren die Mündung der Schlitzdüse (15) begrenzenden Rand. Der untere Gaseinlass (17b) steht über einen Gaskanal (18), der durch eine Seitenwand des Schutzgehäuses (8) zu einem Anschluss (20) führt, mit einer Druckquelle, beispielsweise einem Verdichter in Verbindung.

Der obere Gaseinlass (17a) steht im dargestellten Ausführungsbeispiel aus konstruktiven Gründen über einen ebenfalls in der Seitenwand des Schutzgehäuses geführten Gaskanal (21) mit der Umgebungsluft in Verbindung. In vorteilhafter Ausgestaltung der Erfindung ist jedoch auch dieser Kanal mit dem Verdichter verbunden.

In dem Schutzgehäuse (8) ist oberhalb der Mündung der Schlitzdüse (15) eine Einrichtung (28) zur Erzeugung einer spiralförmigen Gasströmung angeordnet, die nachfolgend kurz als Zirkulationsdüse (28) bezeichnet wird. Die Zirkulationsdüse (28) umfasst einen umlaufenden Gaszufuhrkanal (29) am oberen Rand und einen sich daran anschließenden, konisch verjüngenden rohrförmigen Abschnitt (30) auf, durch den der Laserstrahl (2) hindurchgeführt wird. An der Innenfläche des rohrförmigen Abschnitts (30) mündende Austrittsöffnungen (31) für den Gasstrahl sind über Durchgänge in der Wandung der Zirkulationsdüse (28) mit dem Gaszuführkanal (29) verbunden.

Das Innere (14) des Schutzgehäuses (8) wird durch eine Trennwand (32) in einen oberen Bereich (33) und einen unteren Bereich (34) aufgeteilt. Die beiden Bereiche (33, 34) stehen ausschließlich über die Zirkulationsdüse (38) miteinander in gasleitender Verbindung. Der obere Bereich (33) nimmt die Fokussieroptik (12) sowie das Schutzglas (22) auf. In den Gaszufuhrkanal (29) im oberen Bereich (33) wird über einen Anschluss (23) Gas mit einem Überdruck gegenüber dem Umgebungsdruck im Aufstellungsbereich der Maschine eingeblasen.

Die Maschine zum Materialbearbeiten weist darüber hinaus einen Fliehkraftabscheider (24) mit einem Eintritt (25) und einem Austritt (26) auf, wobei der Eintritt (25) mit dem Auslass (16) und der Austritt (26) mit einem Unterdruckerzeuger (27) verbunden ist.

Die erfindungsgemäße Maschine arbeitet wie folgt:

Zunächst wird das Schweißwerkzeug (3) geschlossen, indem mittels der Verfahreinheit (7) das zuvor positionierte Schweißwerkzeug (3) geschlossen wird. Sobald die Austrittsöffnung (10) auf einem der Werkstücke aufliegt kann das Verschweißen beginnen, wobei sich der von der Fokussieroptik (12) emittierte Laserstrahl (2) entlang der Strahlungsachse (13) in Richtung der Austrittsöffnung (10) ausbreitet. Im Inneren des Schutzgehäuses wird von der Schlitzdüse (15) der quer zur Strahlungsachse (13) verlaufende Gasstrahl erzeugt. Diametral gegenüber der Schlitzdüse (15) wird über den Auslass (16) aus dem Inneren (14) des Schutzgehäuses (8) ein Abgasstrom abgeleitet. Über den unteren Gaseinlass (17b) wird Gas mit einem Überdruck gegenüber dem Umgebungsdruck zugeführt, während über den oberen Gaseinlass (17a) Umgebungsluft aus dem Aufstellbereich der Maschine in Richtung der Oberseite des Gasstrahls des Crossjets nachströmt.

Oberhalb der Mündung der Schlitzdüse (15) wird zeitgleich durch die Zirkulationsdüse (28) eine spiralförmige Gasströmung erzeugt, die den Laserstrahl (2) umgibt.

Der aus dem Schutzgehäuse (8) abgeleitete Abgasstrom umfasst durch den Schweißvorgang verursachte Verunreinigungen, die durch die Austrittsöffnung (10) in das Innere (14) des Schutzgehäuses (8) gelangen. Aus dem Abgasstrom werden mit Hilfe des Fliehkraftabscheiders (24) die Verunreinigungen abgesondert und der gereinigte Abgasstrom mit Hilfe des Unterdruckerzeugers gefördert.

### Bezugszeichenliste

- Maschine zur Materialbearbeitung: 1
- Laserstrahl: 2
- Schweißwerkzeug: 3
- Zangengestell: 4
- Unterwerkzeug: 5
- Oberwerkzeug: 6
- Verfahreinheit: 7
- Schutzgehäuse: 8
- Oberes Druckstück: 9
- Austrittsöffnung: 10
- Flanschplatte: 11
- Fokussieroptik: 12
- Strahlungsachse: 13
- Innere: 14
- Schlitzdüse: 15
- Auslass: 16
- Gaseinlass: 17a, b
- Kanal: 18
- Seitenwand: 19
- Anschluss: 20
- Kanal: 21
- Schutzglas: 22
- Anschluss: 23
- Fliehkraftabscheider: 24
- Eintritt: 25
- Austritt: 26
- Unterdruckerzeuger: 27
- Einrichtung/Zirkulationsdüse: 28
- Gaszufuhrkanal: 29
- Rohrförmiger Abschnitt: 30
- Austrittsöffnungen: 31
- Trennwand: 32
- oberer Bereich: 33
- unterer Bereich: 34

## Patentansprüche

1. Maschine (1) zur Materialbearbeitung mit einem Laserstrahl (2) umfassend ein Schutzgehäuse (8) mit einer in Richtung einer Strahlungsachse (13) ausgerichteten Fokussieroptik (12), einer Austrittsöffnung (10), die den sich bei der Materialbearbeitung entlang der Strahlungsachse (13) ausbreitenden Laserstrahl (2) umgibt, eine im Inneren (14) des Schutzgehäuses (8) mündende Düse (15) zur Erzeugung eines quer zur Strahlungsachse (13) verlaufenden Gasstrahls und einen diametral gegenüber der Düse (15) an dem Schutzgehäuse angeordneten Auslass (16) für einen Abgasstrom, **dadurch gekennzeichnet, dass**
- das Schutzgehäuse (8) mindestens einen im Inneren (14) des Schutzgehäuses (8) mündenden Gaseinlass (17a, 17b) aufweist, der mit einer Druckquelle zur Lieferung eines Gases mit einem Überdruck gegenüber dem Umgebungsdruck verbunden ist
- und die Maschine (1) einem Abscheider (24)zur Absonderung von Verunreinigungen mit einem Eintritt (25) für den Abgasstrom und einem Austritt (26) für den gereinigten Abgasstrom aufweist, wobei der Eintritt (25) mit dem Auslass (16) und der Austritt (26) mit einem Unterdruckerzeuger (27) verbunden ist.

2. Maschine nach Anspruch 1, **dadurch gekennzeichnet, dass** ein Gaseinlass (17a)in Richtung der Strahlungsachse (13) oberhalb und ein Gaseinlass (17b) in Richtung der Strahlungsachse (13) unterhalb der Düse (15) im Inneren (14) des Schutzgehäuses (8) münden.

3. Maschine nach Anspruch 1 oder 2, **dadurch gekennzeichnet, dass** die Düse (15) als Schlitzdüse ausgestaltet ist.

4. Maschine nach einem der Ansprüche 1 bis 3, **dadurch gekennzeichnet, dass** der Abscheider (24) als Fliehkraftabscheider ausgestaltet ist.

5. Maschine nach einem der Ansprüche 1 bis 4, **dadurch gekennzeichnet, dass** in dem Schutzgehäuse (8) oberhalb der Mündung der Düse (15) eine Einrichtung (28) zur Erzeugung einer die Strahlungsachse(13) spiralförmig umgebenden Gasströmung angeordnet ist.

6. Anordnung umfassend eine Strahlquelle für Laserstrahlung sowie ein Strahlführungssystem, das die Laserstrahlung von der Strahlquelle zu einer Fokussieroptik (12) einer Maschine (1) zur Materialbearbeitung nach einem oder mehreren der Ansprüche 1 bis 5 führt.

7. Verfahren zur Materialbearbeitung mit einem Laserstrahl (2) umfassend ein maschinengeführtes Schutzgehäuse (8) mit einer in Richtung einer Strahlungsachse (13) ausgerichteten Fokussieroptik (12) und einer Austrittsöffnung (10), bei dem zur Materialbearbeitung ein sich entlang der Strahlungsachse (13) ausbreitender Laserstrahl (2) erzeugt und durch die Austrittsöffnung (10) auf das Werkstück gerichtet wird, im Inneren (14) des Schutzgehäuses (8) ein von einer Düse (15) ausgehender, quer zur Strahlungsachse (13) verlaufender Gasstrahl erzeugt und ein Abgasstrom diametral gegenüber der Düse (15) über einem an dem Schutzgehäuse (8) angeordneten Auslass (16) aus dem Inneren (14) des Schutzgehäuses (8) abgeleitet wird, **dadurch gekennzeichnet, dass**
- in das Innere (14) des Schutzgehäuses (8) über mindestens einen Gaseinlass (17a, 17b) Gas mit einem Überdruck gegenüber dem Umgebungsdruck zugeführt wird und
- aus dem durch den Auslass(16) abgeleiteten Abgasstrom Verunreinigung mit Hilfe eines Abscheiders (24) abgesondert werden und der gereinigte Abgasstrom aus dem Abscheider (24) mittels eines Unterdruckerzeugers (27) gefördert wird.

8. Verfahren nach Anspruch 7, **dadurch gekennzeichnet, dass** in Richtung der Strahlungsachse (13) oberhalb und in Richtung der Strahlungsachse (13) unterhalb der Düse (15) in das Innere (14) des Schutzgehäuses Gas mit einem Überdruck gegenüber dem Umgebungsdruck zugeführt wird.

9. Verfahren nach Anspruch 7 oder 8, **dadurch gekennzeichnet, dass** das Gas über den mindestens einen Gaseinlass (17a, 17b) derart zugeführt wird, dass eine Hüllströmung um den quer zur Strahlungsachse (13) verlaufenden Gasstrahl erzeugt wird.

10. Verfahren nach einem der Ansprüche 7 bis 9, **dadurch gekennzeichnet, dass** der Abgasstrom in dem Abscheider (24) in eine Drehbewegung versetzt wird.

11. Verfahren nach einem der Ansprüche 7 bis 10, **dadurch gekennzeichnet, dass** in dem Schutzgehäuse (8) oberhalb der Mündung der Düse (15) eine spiralförmige Gasströmung erzeugt wird, die die Strahlungsachse (13) und den Laserstrahl (2) bei der Materialbearbeitung umgibt.
